# EUROPÄISCHE PATENTSCHRIFT

(11) **EP 3 656 201 B1**
(45) Veröffentlichungstag und Bekanntmachung des Hinweises auf die Patenterteilung: **11.08.2021**
(21) Anmeldenummer: 19401049.2
(22) Anmeldetag: 22.11.2019
(51) Int. Cl.: A01C 17/00

(54) **VERFAHREN ZUM ERMITTELN VON EINSTELLEMPFEHLUNGEN**
METHOD FOR DETERMINING SETTING RECOMMENDATIONS
PROCÉDÉ DE DÉTERMINATION DE RECOMMANDATIONS DE RÉGLAGE

(30) Priorität: 26.11.2018 DE 102018129715
(43) Veröffentlichungstag der Anmeldung: 27.05.2020
(73) Patentinhaber: Amazonen-Werke H. Dreyer SE & Co. KG, 49205 Hasbergen (DE)
(72) Erfinder: Rahe, Florian, 49504 Lotte (DE); Ströbel-Fröschle, Markus, 49124 Georgsmarienhütte (DE)

(56) Entgegenhaltungen:
- EP-A1- 3 195 716
- EP-A2- 2 924 417

## Beschreibung

Die Erfindung betrifft ein Verfahren zum Ermitteln von Einstellempfehlungen nach dem Oberbegriff des Patentanspruchs 1.

Beim Ausbringen von Streugut auf landwirtschaftlichen Nutzflächen werden landwirtschaftliche Streumaschinen eingesetzt, welche vor und/oder während des Streuvorgangs in geeigneter Weise einzustellen sind, damit ein beabsichtigtes Streuergebnis erzielt wird.

Im Stand der Technik werden hierzu bisher Streutabellen verwendet, welche einem Landwirt entsprechende Einstellempfehlungen für eine landwirtschaftliche Streumaschine für einen geplanten Streuvorgang zur Verfügung stellen. Die Verwendung entsprechender Streutabellen führt jedoch nicht selten zur Vornahme von Fehleinstellungen an den landwirtschaftlichen Streumaschinen, sodass es nicht zur Umsetzung der beabsichtigten Streugutverteilung auf der landwirtschaftlichen Nutzfläche kommt.

Darüber hinaus berücksichtigen die bekannten Streutabellen nicht die tatsächlichen Flug- bzw. Streueigenschaften des auszubringenden Streuguts und basieren üblicherweise auf Testausbringungen, welche unter Laborbedingungen durchgeführt wurden. Streugutveränderungen, beispielsweise durch den Hersteller des Streuguts, Entmischung beim Transport und/oder eine veränderte Feuchtigkeit, führen somit häufig zu einer unbeabsichtigten Streugutverteilung, von welcher der Landwirt im Regelfall keine Kenntnis erlangt.

Zum Ermitteln der Einstellempfehlungen für eine landwirtschaftliche Streumaschine für einen geplanten Streuvorgang ist es erforderlich, dass Informationen zu der Streuscheibe der landwirtschaftlichen Streumaschine, welche bei dem geplanten Streuvorgang verwendet werden soll, berücksichtigt werden. Ferner ist eine umzusetzende Arbeitsbreite für den geplanten Streuvorgang vorzugeben. Unter Verwendung der Informationen zu der Streuscheibe der landwirtschaftlichen Streumaschine und der bei dem geplanten Streuvorgang umzusetzenden Arbeitsbreite können dann Einstellempfehlungen für die landwirtschaftliche Streumaschine berechnet werden, welche die Einstellung einer optimalen Wurfrichtung und einer optimalen Wurfweite des Streuguts für den geplanten Streuvorgang bedingen und/oder ermöglichen. Die EP 3 195 716 A1 offenbart ein dementsprechendes Verfahren und den Oberbegriff des Anspruchs 1.

Bei der Anwendung entsprechender Berechnungsmethoden besteht in der Praxis jedoch das Problem, dass aufwendige Streutests mit dem auszubringenden Streugut und der einzusetzenden Streuscheibe auszuführen sind, damit weitere für die Berechnung notwendige Parameter vorliegen. Eine Umrechnung von Streudaten, welche mit einer anderen Streuscheibe und/oder mit einer anderen Scheibendrehzahl zuvor aufgezeichnet wurden, ist bisher nicht möglich.

Die der Erfindung zugrundeliegende Aufgabe besteht somit darin, das Ermitteln von Einstellempfehlungen für eine landwirtschaftliche Streumaschine für einen geplanten Streuvorgang dahingehend zu vereinfachen, dass die Ermittlung auch auf Daten gestützt werden kann, welche mit beliebigen Maschineneinstellungen aufgezeichnet wurden, wobei diese beliebigen Maschineneinstellungen auch von den für den geplanten Streuvorgang erforderlichen Maschineneinstellungen abweichen können.

Die Aufgabe wird gelöst durch ein Verfahren der eingangs genannten Art, wobei im Rahmen des erfindungsgemäßen Verfahrens das Berechnen der Einstellempfehlungen für die landwirtschaftliche Streumaschine unter Verwendung einer normierten Wurfweite und/oder einer normierten Wurfrichtung erfolgt, welche sich auf eine Normausbringung des Streuguts mit einer Normstreuscheibe bei einer Normdrehzahl beziehen.

Die Erfindung macht sich die Erkenntnis zunutze, dass unter Verwendung einer normierten Wurfweite und/oder einer normierten Wurfrichtung Umrechnungen realisierbar sind, welche das Ermitteln von geeigneten Einstellparametern für eine landwirtschaftliche Streumaschine für einen geplanten Streuvorgang erlauben, wobei der Ermittlung Daten zugrunde gelegt werden können, welche beispielsweise mit einer anderen Streuscheibe, einer anderen Scheibendrehzahl, einem anderen Aufgabepunkt des Streuguts auf die Streuscheibe und/oder einer anderen Streuscheibenkonfiguration aufgezeichnet wurden.

Die Informationen zu der Streuscheibe können eine Streuscheibenbezeichnung oder eine andere Angabe umfassen, mittels welcher der Streuscheibentyp identifizierbar ist. Das Bereitstellen der Informationen zu der Streuscheibe und des Wertes für die bei dem geplanten Streuvorgang umzusetzende Arbeitsbreite erfolgt vorzugsweise mittels eines mobilen Endgeräts. Das mobile Endgerät kann beispielsweise ein Smartphone oder Tablet sein. Die Informationen zu der Streuscheibe und des Wertes für die bei dem geplanten Streuvorgang umzusetzende Arbeitsbreite werden vorzugsweise einer Berechnungseinrichtung zur Verfügung gestellt. Das Berechnen der Einstellempfehlungen für die landwirtschaftliche Streumaschine erfolgt vorzugsweise durch die Berechnungseinrichtung. Die Berechnungseinrichtung kann Bestandteil des mobilen Endgeräts, eines entfernten Zentralrechners oder des landwirtschaftlichen Streugeräts sein.

Die normierte Wurfweite und/oder die normierte Wurfrichtung können sich auch auf eine Normausbringung des Streuguts mit einer Normstreuscheibe mit normierten Schaufeleinstellungen beziehen, wenn Streuscheiben eingesetzt werden sollen, die einstellbare Wurfschaufeln aufweisen. Die Schaufeleinstellungen können die Schaufelposition, die Schaufelneigung, die Schaufelausrichtung und/oder die Schaufellänge betreffen. Alternativ können sich die normierte Wurfweite und/oder die normierte Wurfrichtung auch auf eine Normausbringung des Streuguts mit einer Normstreuscheibe und einer normierten Streugutzuführung beziehen. Die Streugutzuführung kann die Öffnungsgröße, die Öffnungsform und/oder die Öffnungsposition einer Streugut-Zufuhröffnung und/oder die Rutschenneigung, die Rutschenausrichtung und/oder die Rutschenposition betreffen, wenn zur Ausbringung des Streuguts das Streugut über eine Zufuhrrutsche der landwirtschaftlichen Streumaschine geleitet werden soll.

In einer weiteren bevorzugten Ausführungsform des erfindungsgemäßen Verfahrens wird die normierte Wurfweite des Streuguts ermittelt und/oder die normierte Wurfweite des Streuguts wird von einer Datenbank abgerufen. Alternativ oder zusätzlich wird die normierte Wurfrichtung des Streuguts ermittelt und/oder die normierte Wurfrichtung des Streuguts wird von einer Datenbank abgerufen. Der Abruf der normierten Wurfweite und/oder der normierten Wurfrichtung des Streuguts kann erfolgen, wenn das Streugut bekannt ist und eine Kommunikationsverbindung zu der Datenbank besteht. Vorzugsweise wird die normierte Wurfweite und/oder die normierte Wurfrichtung des Streuguts durch das mobile Endgerät über eine Drahtlosverbindung von der Datenbank abgerufen. Wenn das Streugut, welches im Rahmen des geplanten Streuvorgangs ausgebracht werden soll, nicht bekannt ist, ist ein entsprechender Abruf der normierten Wurfweite und der normierten Wurfrichtung von der Datenbank nicht möglich. In diesem Fall ist die normierte Wurfweite und/oder die normierte Wurfrichtung zunächst zu ermitteln, insbesondere zu berechnen. Die Ermittlung bzw. Berechnung der normierten Wurfweite und/oder der normierten Wurfrichtung erfolgt vorzugsweise durch das mobile Endgerät.

In einer anderen Ausführungsform des erfindungsgemäßen Verfahrens umfasst das Ermitteln der normierten Wurfweite des Streuguts das Durchführen einer Referenzausbringung mittels der landwirtschaftlichen Streumaschine, das Erfassen der bei der Referenzausbringung verwendeten Referenzstreuscheibe, das Erfassen der bei der Referenzausbringung eingestellten Referenzdrehzahl der Referenzstreuscheibe und/oder das Erfassen der Referenzwurfweite des Streuguts bei der Referenzausbringung. Das Erfassen der Referenzwurfweite des Streuguts bei der Referenzausbringung erfolgt vorzugsweise durch eine Wurfweitenmesseinrichtung der landwirtschaftlichen Streumaschine. Die Referenzausbringung wird vorzugsweise unmittelbar vor dem geplanten Streuvorgang, zu Beginn und/oder während des geplanten Streuvorgangs ausgeführt und dient zur Aufzeichnung von Referenzdaten, welche zur Ermittlung der Einstellempfehlungen für den geplanten Streuvorgang Verwendung finden können. Vorzugsweise umfasst das Ermitteln der normierten Wurfweite des Streuguts das Abrufen eines scheibenspezifischen Wurfweitenumrechnungsfaktors zu der Referenzstreuscheibe von einer Datenbank, das Abrufen eines drehzahlspezifischen Wurfweitenumrechnungsfaktors zu einer Referenzdrehzahl von einer Datenbank und/oder das Umrechnen der Referenzwurfweite in die normierte Wurfweite mittels des scheibenspezifischen Wurfweitenumrechnungsfaktors und/oder des drehzahlspezifischen Wurfweitenumrechnungsfaktors. Mittels scheibenspezifischen Wurfweitenumrechnungsfaktoren und drehzahlspezifischen Wurfweitenumrechnungsfaktoren lässt sich die normierte Wurfweite, welche sich auf eine Normausbringung mit einer Normstreuscheibe bei einer Normdrehzahl bezieht, auf eine Wurfweite einer Ausbringung mit einer anderen Streuscheibe und/oder einer anderen Drehzahl transformieren. Eine entsprechende Transformierung ist auch in umgekehrter Richtung durchführbar. Alternativ zu dem scheibenspezifischen Wurfweitenumrechnungsfaktor kann auch eine scheibenspezifische Wurfweitenumrechnungsfunktion abgerufen und verwendet werden. Alternativ zu dem drehzahlspezifischen Wurfweitenumrechnungsfaktor kann auch eine drehzahlspezifische Wurfweitenumrechnungsfunktion abgerufen und verwendet werden.

Wenn zur Ausbringung des Streuguts eine Streuscheibe mit einer oder mehreren Wurfschaufeln eingesetzt wird, können auch die bei der Referenzausbringung eingestellten Schaufeleigenschaften ermittelt werden, sodass die Referenzwurfweite mittels eines entsprechenden schaufeleinstellungsspezifischen Wurfweitenumrechnungsfaktors oder einer entsprechenden schaufeleinstellungsspezifischen Wurfweitenumrechnungsfunktion in die normierte Wurfweite umgerechnet werden kann.

In einer anderen Ausführungsform des erfindungsgemäßen Verfahrens umfasst das Ermitteln der normierten Wurfrichtung des Streuguts das Durchführen einer Referenzausbringung mittels der landwirtschaftlichen Streumaschine, das Erfassen der bei der Referenzausbringung verwendeten Referenzstreuscheibe, das Erfassen der bei der Referenzausbringung eingestellten Referenzdrehzahl der Referenzstreuscheibe und/oder das Erfassen der Referenzwurfrichtung des Streuguts bei der Referenzausbringung. Das Erfassen der Referenzwurfrichtung des Streuguts bei der Referenzausbringung erfolgt vorzugsweise durch eine Wurfrichtungsmesseinrichtung der Streumaschine. Vorzugsweise umfasst das Ermitteln der normierten Wurfrichtung des Streuguts das Abrufen eines scheibenspezifischen Wurfrichtungsumrechnungsoffsets zu der Referenzstreuscheibe von einer Datenbank, das Abrufen eines drehzahlspezifischen Wurfrichtungsumrechnungsoffsets zu der Referenzdrehzahl von einer Datenbank und/oder das Umrechnen der Referenzwurfrichtung in die normierte Wurfrichtung mittels des scheibenspezifischen Wurfrichtungsumrechnungsoffsets und/oder des drehzahlspezifischen Wurfrichtungsumrechnungsoffsets. Mittels scheibenspezifischen Wurfrichtungsumrechnungsoffsets und drehzahlspezifischen Wurfrichtungsumrechnungsoffsets lässt sich die normierte Wurfrichtung, welche sich auf eine Normausbringung mit einer Normstreuscheibe bei einer Normdrehzahl bezieht, auf eine Wurfrichtung einer Ausbringung mit einer anderen Streuscheibe und/oder einer anderen Drehzahl transformieren. Eine entsprechende Transformierung ist auch in umgekehrter Richtung durchführbar. Alternativ zu dem scheibenspezifischen Wurfrichtungsumrechnungsoffset kann auch eine scheibenspezifische Wurfrichtungsumrechnungsfunktion abgerufen und verwendet werden. Alternativ zu dem drehzahlspezifischen Wurfrichtungsumrechnungsoffset kann auch eine drehzahlspezifische Wurfrichtungsumrechnungsfunktion abgerufen und verwendet werden.

Wenn zur Ausbringung des Streuguts eine Streuscheibe mit einer oder mehreren Wurfschaufeln eingesetzt wird, können auch die bei der Referenzausbringung eingestellten Schaufeleigenschaften ermittelt werden, sodass die Referenzwurfrichtung mittels eines entsprechenden schaufeleinstellungsspezifischen Wurfrichtungsumrechnungsoffsets oder einer entsprechenden schaufeleinstellungsspezifischen Wurfrichtungsumrechnungsfunktion in die normierte Wurfrichtung umgerechnet werden kann.

Die Umrechnungsfaktoren, Umrechnungsoffsets und/oder Umrechnungsfunktionen können auch sowohl scheibenspezifisch bzw. schaufeleinstellungsspezifisch als auch drehzahlspezifisch sein. Die Umrechnungsfaktoren, Umrechnungsoffsets und/oder Umrechnungsfunktionen sind dann sowohl abhängig von der Scheibe der Wurfschaufeleinstellungen der Scheibe als auch von der Drehzahl abhängig.

In einer anderen bevorzugten Ausführungsform des erfindungsgemäßen Verfahrens umfasst das Berechnen der Einstellempfehlungen für die landwirtschaftliche Streumaschine das Ermitteln einer Einstellempfehlung für die optimale Drehzahl der Streuscheibe der landwirtschaftlichen Streumaschine für den geplanten Streuvorgang, welche die Einstellung der optimalen Wurfweite des Streuguts bedingt und/oder ermöglicht. Alternativ oder zusätzlich umfasst das Berechnen der Einstellempfehlungen für die landwirtschaftliche Streumaschine das Ermitteln einer Einstellempfehlung für den optimalen Aufgabepunkt des Streuguts auf die Streuscheibe der landwirtschaftlichen Streumaschine für den geplanten Streuvorgang, welche die Einstellung der optimalen Wurfrichtung des Streuguts bedingt und/oder ermöglicht. Die ermittelten Einstellempfehlungen für die optimale Drehzahl und/oder den optimalen Aufgabepunkt können dann durch das verwendete mobile Endgerät ausgegeben werden, sodass der Landwirt die entsprechenden Einstellungen an der landwirtschaftlichen Streumaschine vornehmen kann. Alternativ oder zusätzlich können die berechneten Einstellempfehlungen auch der landwirtschaftlichen Streumaschine zur Verfügung gestellt werden, sodass beispielsweise eine selbsttägige Vornahme entsprechender Einstellungen an der landwirtschaftlichen Streumaschine erfolgen kann. Ferner kann das Berechnen der Einstellempfehlungen auch durch die landwirtschaftliche Streumaschine selbst erfolgen, sodass kein gesonderter Datenaustausch mit einem mobilen Endgerät notwendig ist.

Ferner kann das Berechnen der Einstellempfehlung für die landwirtschaftliche Streumaschine das Ermitteln einer Einstellempfehlung für die optimale Schaufelposition, Schaufellänge und/oder Schaufelneigung der einen oder der mehreren Wurfschaufeln der Streuscheibe der landwirtschaftlichen Streumaschine für den geplanten Streuvorgang umfassen, wenn entsprechende Streuscheiben zum Einsatz kommen. Diese Schaufeleinstellungen führen vorzugsweise zu der Einstellung einer optimalen Wurfweite des Streuguts und/oder zu einer optimalen Wurfrichtung des Streuguts für den geplanten Streuvorgang.

In einer weiteren bevorzugten Ausführungsform des erfindungsgemäßen Verfahrens umfasst das Ermitteln einer Einstellempfehlung für die optimale Drehzahl der Streuscheibe der landwirtschaftlichen Streumaschine für den geplanten Streuvorgang das Berechnen einer optimalen Wurfweite des Streuguts für den geplanten Streuvorgang auf Grundlage der bei dem geplanten Streuvorgang umzusetzenden Arbeitsbreite. Das Ermitteln der Einstellempfehlung für die optimale Drehzahl der Streuscheibe der landwirtschaftlichen Streumaschine für den geplanten Streuvorgang erfolgt auf Grundlage der normierten Wurfweite, der berechneten optimalen Wurfweite und den Informationen zu der Streuscheibe der landwirtschaftlichen Streumaschine, welche bei dem geplanten Streuvorgang verwendet wird. Beim Berechnen der optimalen Wurfweite des Streuguts für den geplanten Streuvorgang auf Grundlage der bei dem geplanten Streuvorgang umzusetzenden Arbeitsbreite können auch die Informationen zu der Streuscheibe der landwirtschaftlichen Streumaschine, welche bei dem geplanten Streuvorgang verwendet wird, berücksichtigt werden.

In einer weiteren Ausführungsform des erfindungsgemäßen Verfahrens umfasst das Ermitteln einer Einstellempfehlung für den optimalen Aufgabepunkt des Streuguts auf die Streuscheibe der landwirtschaftlichen Streumaschine für den geplanten Streuvorgang das Berechnen einer optimalen Wurfrichtung des Streuguts für den geplanten Streuvorgang auf Grundlage der bei dem geplanten Streuvorgang umzusetzenden Arbeitsbreite. Das Ermitteln der Einstellempfehlung für den optimalen Aufgabepunkt des Streuguts auf die Streuscheibe der landwirtschaftlichen Streumaschine für den geplanten Streuvorgang erfolgt auf Grundlage der normierten Wurfweite, der berechneten optimalen Wurfweite und den Informationen zu der Streuscheibe der landwirtschaftlichen Streumaschine, welche bei dem geplanten Streuvorgang verwendet wird.

Die ermittelten Einstellempfehlungen für die landwirtschaftliche Streumaschine für den geplanten Streuvorgang können beispielsweise durch eine Anzeigeeinrichtung, etwa eine Anzeigeeinrichtung eines mobilen Endgeräts oder einer Anzeigeeinrichtung der landwirtschaftlichen Streumaschine, optisch ausgegeben werden, damit entsprechende Einstellungen manuell an der landwirtschaftlichen Streumaschine vorgenommen werden können. Alternativ oder zusätzlich können die ermittelten Einstellempfehlungen auch einer Steuerungseinrichtung der landwirtschaftlichen Streumaschine bereitgestellt werden, sodass eine selbsttätige Umsetzung der Einstellungen an der landwirtschaftlichen Streumaschine erfolgt.

Nachfolgend werden bevorzugte Ausführungsformen der Erfindung unter Bezugnahme auf die beiliegenden Zeichnungen näher erläutert und beschrieben. Dabei zeigen:
- Fig. 1: ein System, mittels welchem das erfindungsgemäße Verfahren zum Ermitteln von Einstellempfehlungen ausführbar ist;
- Fig. 2: Zusammenhänge, welche im Rahmen des erfindungsgemäßen Verfahrens zum Ermitteln von Einstellempfehlungen genutzt werden;
- Fig. 3: Zusammenhänge, welche im Rahmen des erfindungsgemäßen Verfahrens zum Ermitteln von Einstellempfehlungen genutzt werden;
- Fig. 4: Zusammenhänge, welche im Rahmen des erfindungsgemäßen Verfahrens zum Ermitteln von Einstellempfehlungen genutzt werden; und
- Fig. 5: Zusammenhänge, welche im Rahmen des erfindungsgemäßen Verfahrens zum Ermitteln von Einstellempfehlungen genutzt werden.

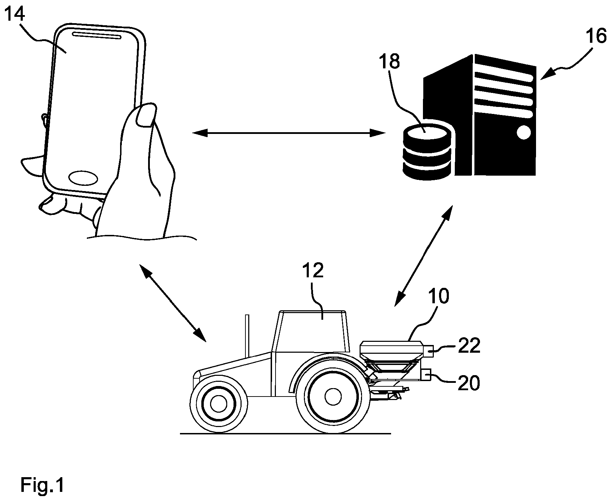

Die Fig. 1 zeigt ein System mit einer landwirtschaftlichen Streumaschine 10, einem mobilen Endgerät 14 und einem Zentralcomputer 16. Die landwirtschaftliche Streumaschine 10 ist als Zweischeiben-Düngerstreuer ausgebildet und wird von einem als Traktor ausgebildeten Trägerfahrzeug 12 getragen. Mittels der landwirtschaftlichen Streumaschine 10 soll auf einer landwirtschaftlichen Nutzfläche ein geplanter Streuvorgang ausgeführt werden. Hierzu sind an der landwirtschaftlichen Streumaschine 10 geeignete Einstellungen vorzunehmen, damit die gewünschte Streugutverteilung umgesetzt wird.

Die landwirtschaftliche Streumaschine 10 und/oder das Trägerfahrzeug 12 sind signalleitend, beispielsweise über eine Drahtlosverbindung, mit dem mobilen Endgerät 14 verbunden. Das mobile Endgerät 14 ist als Smartphone ausgebildet und umfasst eine kombinierte Eingabe- und Anzeigeeinrichtung, welche als Touchscreen ausgebildet ist. Das mobile Endgerät 14 ist signalleitend, insbesondere ebenfalls über eine Drahtlosverbindung, mit dem Zentralcomputer 16 verbunden. Der Zentralcomputer 16 weist eine Datenbank 18 auf, auf welcher Streudaten gespeichert sind. Zum Austausch von auf der Datenbank 18 gespeicherten Daten ist der Zentralcomputer 16 signalleitend mit der landwirtschaftlichen Streumaschine 10 und/oder dem Trägerfahrzeug 12 der landwirtschaftlichen Streumaschine 10 verbunden, insbesondere ebenfalls über eine Drahtlosverbindung.

Zum Ermitteln der Einstellempfehlungen für die landwirtschaftliche Streumaschine 10 für den geplanten Streuvorgang sind einer Berechnungseinrichtung zunächst grundlegende Informationen zu dem geplanten Streuvorgang bereitzustellen. Die Berechnungseinrichtung kann grundsätzlich Bestandteil der landwirtschaftlichen Streumaschine 10, des Trägerfahrzeugs 12, des mobilen Endgeräts 14 oder des Zentralcomputers 16 sein.

Der Berechnungseinrichtung sind zunächst Informationen 108 zu der Streuscheibe der landwirtschaftlichen Streumaschine 10 bereitzustellen. Die Informationen 108 zu der Streuscheibe können beispielsweise eine Streuscheibenbezeichnung oder eine andere Angabe umfassen, mittels welcher der zu verwendende Streuscheibentyp identifizierbar ist. Darüber hinaus ist der Berechnungseinrichtung ein Wert für die bei dem geplanten Streuvorgang umzusetzende Arbeitsbreite 120 bereitzustellen. Die Bereitstellung der Informationen 108 zu der Streuscheibe der landwirtschaftlichen Streumaschine 10 und des Wertes für die bei dem geplanten Streuvorgang umzusetzende Arbeitsbreite 120 können beispielsweise über das mobile Endgerät 14 eingegeben werden. Alternativ kann die Eingabe auch direkt an der landwirtschaftlichen Streumaschine 10 oder dem Trägerfahrzeug 12 erfolgen.

Anschließend erfolgt ein Berechnen von Einstellempfehlungen für die landwirtschaftliche Streumaschine 10, welche die Einstellung einer optimalen Wurfrichtung 126 und einer optimalen Wurfweite 122 des Streuguts für den geplanten Streuvorgang bedingen und/oder ermöglichen. Die Einstellempfehlungen für die landwirtschaftliche Streumaschine 10 können beispielsweise eine Drehzahl für die Streuscheiben der landwirtschaftlichen Streumaschine 10 und/oder einen Einstellwert für den Aufgabepunkt des Streuguts auf die Streuscheiben der landwirtschaftlichen Streumaschine 10 betreffen.

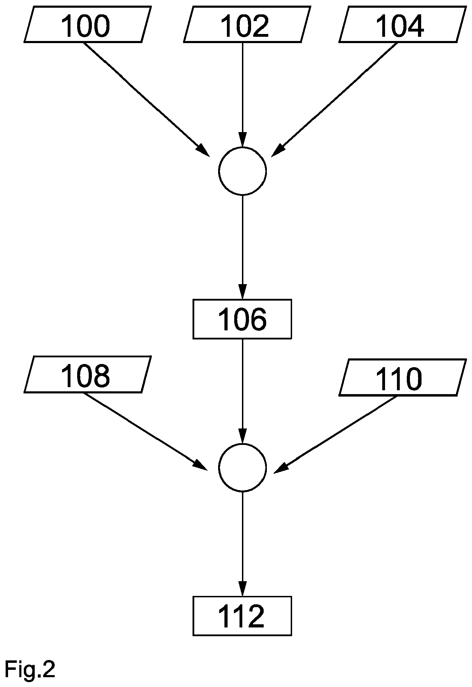

Das Berechnen der Einstellempfehlungen wird von der Berechnungseinrichtung durchgeführt und erfolgt unter Verwendung der bereitgestellten Informationen 108 zu der Streuscheibe der landwirtschaftlichen Streumaschine und des bereitgestellten Wertes für die bei dem geplanten Streuvorgang umzusetzende Arbeitsbreite 120. Darüber hinaus wird beim Berechnen der Einstellempfehlungen eine normierte Wurfweite 106 und/oder eine normierte Wurfrichtung 116 berücksichtigt, welche sich auf eine Normausbringung des Streuguts mit einer Normstreuscheibe bei einer Normdrehzahl beziehen. Die bei der Berechnung der Einstellempfehlungen nutzbaren Zusammenhänge werden nachfolgend unter Bezugnahme auf die Fig. 2 bis Fig. 5 näher erläutert.

Zum Ermitteln der normierten Wurfweite 106 des Streuguts ist zunächst vor dem eigentlichen geplanten Streuvorgang eine Referenzausbringung mittels der landwirtschaftlichen Streumaschine 10 durchzuführen. Damit für die nachfolgende Berechnung die bei der Referenzausbringung verwendete Referenzstreuscheibe 100 bekannt ist, wird diese im Vorfeld der Referenzausbringung erfasst. Das Erfassen kann beispielsweise direkt durch die landwirtschaftliche Streumaschine 10 erfolgen, beispielsweise durch Auslesen eines auf der Referenzstreuscheibe 100 angebrachten Codes oder durch Empfangen von Daten, welche von einem Sendemodul der Referenzstreuscheibe 100 versendet werden. Alternativ kann die bei der Referenzausbringung verwendete Referenzstreuscheibe 100 auch über das mobile Endgerät 14 definiert werden.

Während der Referenzausbringung wird die eingestellte Referenzdrehzahl 104 der Referenzstreuscheibe 100 erfasst. Ferner wird die Referenzwurfweite 102 des Streuguts bei der Referenzausbringung erfasst. Zur Erfassung der Referenzwurfweite 102 umfasst die landwirtschaftliche Streumaschine eine Wurfweitenmesseinrichtung 22, mittels welcher die Wurfweite von Streugut während eines Streuvorgangs erfasst werden kann.

Zum Ermitteln der normierten Wurfweite 106 sind nunmehr Umrechnungsfaktoren von der Datenbank 18 abzurufen, mittels welchen die Referenzwurfweite 102 in die normierte Wurfweite 106 umgerechnet werden kann. Hierzu wird ein scheibenspezifischer Wurfweitenumrechnungsfaktor zu der Referenzstreuscheibe 100 von der Datenbank 18 abgerufen. Ferner wird ein drehzahlspezifischer Wurfweitenumrechnungsfaktor zu der Referenzdrehzahl 104 von der Datenbank 18 abgerufen. Anschließend erfolgt ein Umrechnen der Referenzwurfweite 102 in die normierte Wurfweite 106 mittels des scheibenspezifischen Wurfweitenumrechnungsfaktors und des drehzahlspezifischen Wurfweitenumrechnungsfaktors.

Die Umrechnungsfaktoren, Umrechnungsoffsets und/oder Umrechnungsfunktionen können auch sowohl scheibenspezifisch bzw. schaufeleinstellungsspezifisch als auch drehzahlspezifisch sein. Die Umrechnungsfaktoren, Umrechnungsoffsets und/oder Umrechnungsfunktionen sind dann sowohl abhängig von der Scheibe der Wurfschaufeleinstellungen der Scheibe als auch von der Drehzahl abhängig.

Mittels scheibenspezifischer Wurfumrechnungsfaktoren und drehzahlspezifischer Wurfumrechnungsfaktoren lässt sich die normierte Wurfweite 106, welche sich auf eine Normausbringung mit einer Normstreuscheibe bei einer Normdrehzahl bezieht, auf eine Wurfweite 112 einer Ausbringung mit einer anderen Streuscheibe 108 und/oder einer anderen Drehzahl 110 transformieren. Für die Transformation der normierten Wurfweite 106 auf eine für den geplanten Streuvorgang geeignete Wurfweite 112 sind nunmehr erneut Umrechnungsfaktoren von der Datenbank 18 abzurufen. In diesem Zusammenhang wird ein scheibenspezifischer Wurfweitenumrechnungsfaktor zu der Streuscheibe 108, welche bei dem geplanten Streuvorgang verwendet werden soll, von der Datenbank 18 abgerufen. Außerdem wird ein drehzahlspezifischer Wurfweitenumrechnungsfaktor zu der Scheibendrehzahl 110, welche bei der geplanten Streugutausbringung einzustellen ist, von der Datenbank 18 abgerufen. Auf Grundlage dieser Umrechnungsfaktoren lässt sich die normierte Wurfweite 106 in eine geeignete Wurfweite 112 für den geplanten Streuvorgang transformieren.

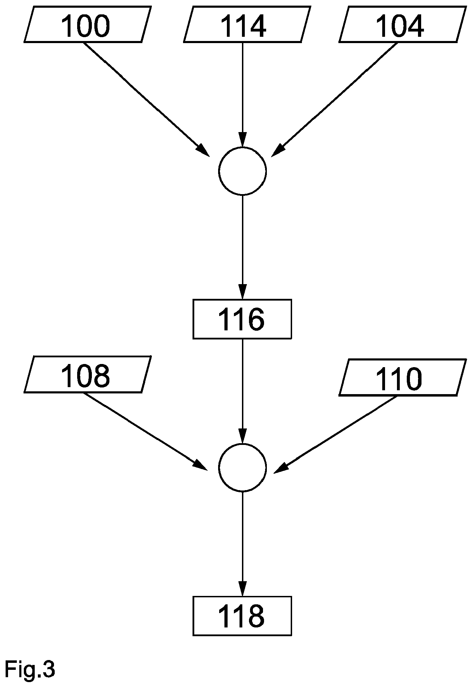

Die Fig. 3 zeigt die Transformation einer normierten Wurfrichtung 116 auf die Wurfrichtung 118 für einen geplanten Streuvorgang.

Im Rahmen einer Referenzausbringung vor dem eigentlichen geplanten Streuvorgang ist nunmehr eine Referenzwurfrichtung 114 des Streuguts zu ermitteln. Das Erfassen der Referenzwurfrichtung 114 des Streuguts bei der Referenzausbringung erfolgt durch eine Wurfrichtungsmesseinrichtung 20 der landwirtschaftlichen Streumaschine 10. Auf Grundlage der Informationen 100 zu der bei der Referenzausbringung verwendeten Referenzstreuscheibe und der bei der Referenzausbringung eingestellten Referenzdrehzahl 104 kann nun ein scheibenspezifischer Wurfrichtungsumrechnungsoffset zu der Referenzstreuscheibe 100 von der Datenbank 18 abgerufen werden. Außerdem kann ein drehzahlspezifischer Wurfrichtungsumrechnungsoffset zu der Referenzdrehzahl 104 von der Datenbank 18 abgerufen werden. Nach dem Abruf der Offset-Werte erfolgt ein Umrechnen der Referenzwurfrichtung 114 in die normierte Wurfrichtung 116 mittels des scheibenspezifischen Wurfrichtungsumrechnungsoffsets und des drehzahlspezifischen Wurfrichtungsumrechnungsoffsets.

Da bekannt ist, welche Streuscheibe 108 bei dem geplanten Streuvorgang eingesetzt werden soll und welche Streuscheibendrehzahl 110 bei dem geplanten Streuvorgang einzustellen ist, kann nunmehr ein entsprechender scheibenspezifischer Wurfrichtungsumrechnungsoffset und ein entsprechender drehzahlspezifischer Wurfrichtungsumrechnungsoffset von der Datenbank 18 abgerufen werden, über welche die normierte Wurfrichtung 116 in die Wurfrichtung 118 transformiert werden kann, welche für den geplanten Streuvorgang geeignet ist.

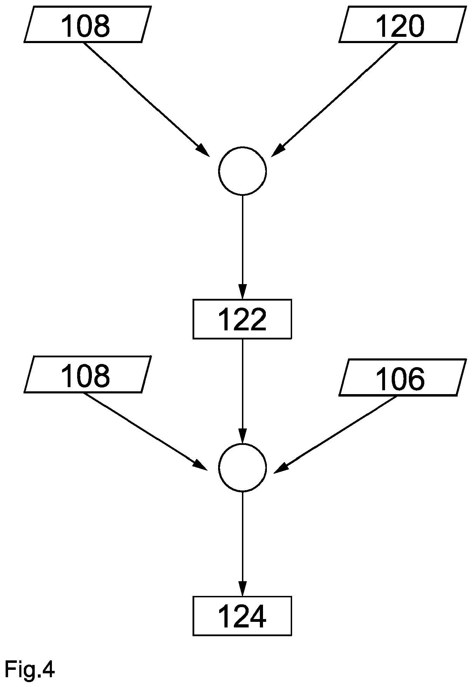

Die Fig. 4 zeigt, dass die Berechnungseinrichtung dazu eingerichtet ist, aus den Streuscheibeninformationen 108 und dem Wert für die umzusetzende Arbeitsbreite 120 eine optimale Wurfweite 122 für den geplanten Streuvorgang zu ermitteln. Die optimale Wurfweite 122 kann im Folgenden durch die Berechnungseinrichtung in eine optimale Drehzahl 124 transformiert werden, wobei die optimale Drehzahl 124 für den geplanten Streuvorgang eine Einstellempfehlung für die landwirtschaftliche Streumaschine 10 darstellt. Die Transformation der optimalen Wurfweite 122 in die optimale Drehzahl 124 erfolgt einerseits unter Berücksichtigung der Streuscheibe 108, welche bei dem geplanten Streuvorgang eingesetzt werden soll, und andererseits unter Berücksichtigung der normierten Wurfweite 106, welche sich auf eine Normausbringung des Streuguts mit einer Normstreuscheibe bei einer Normdrehzahl bezieht.

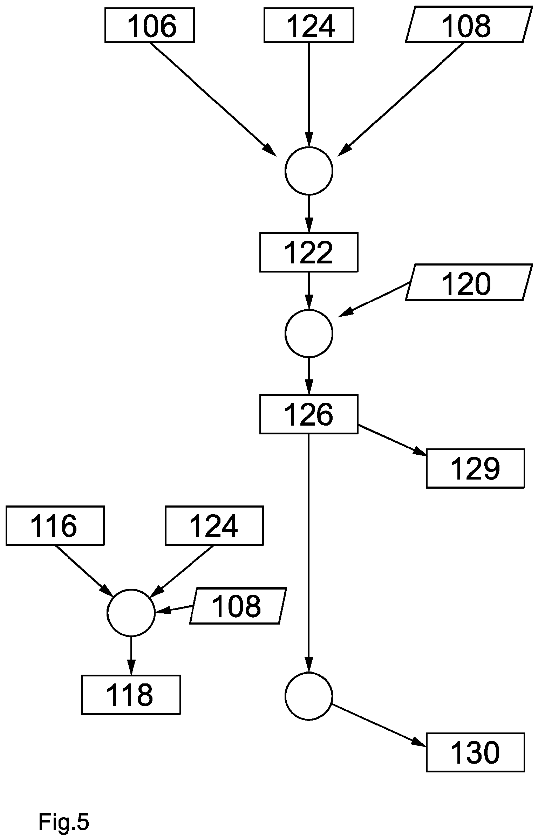

Die Fig. 5 zeigt, dass die Berechnungseinrichtung dazu eingerichtet ist, auf Grundlage der normierten Wurfweite 106, der optimalen Drehzahl 124 und Informationen 108 zu der Streuscheibe der landwirtschaftlichen Streumaschine 10, welche bei dem geplanten Streuvorgang verwendet werden soll, die optimale Wurfweite 122 zu berechnen. Aus der optimalen Wurfweite 122 sowie der bei dem geplanten Streuvorgang umzusetzenden Arbeitsbreite 120 ermittelt die Berechnungseinrichtung die optimale Wurfrichtung 126. Die optimale Wurfrichtung 126 kann beispielsweise einer Wurfrichtungsregelung 128 der landwirtschaftlichen Streumaschine 10 zur Verfügung gestellt werden, sodass während des Streuvorgangs ständig die optimale Wurfrichtung 126 eingeregelt wird.

Die Berechnungseinrichtung ist außerdem dazu eingerichtet, aus der normierten Wurfrichtung 116, der optimalen Drehzahl 124 sowie den Informationen 108 zu der Streuscheibe der landwirtschaftlichen Streumaschine 10, welche bei dem geplanten Streuvorgang verwendet werden soll, eine entsprechende Wurfrichtung 118 bei einem Normeinstellwert für den Aufgabepunkt des Streuguts auf die Streuscheiben der landwirtschaftlichen Streumaschine 10 zu ermitteln. Auf Grundlage dieser Wurfrichtung 118 sowie der optimalen Wurfrichtung 126 lässt sich dann ein optimaler Einstellwert 130 für den Aufgabepunkt des Streuguts auf die Streuscheiben der landwirtschaftlichen Streumaschine 10 ermitteln.

### Bezugszeichen

- 10: Streumaschine
- 12: Trägerfahrzeug
- 14: mobiles Endgerät
- 16: Zentralcomputer
- 18: Datenbank
- 20: Wurfrichtungsmesseinrichtung
- 22: Wurfweitenmesseinrichtung

- 100: Informationen zur Referenzstreuscheibe
- 102: Referenzwurfweite
- 104: Referenzdrehzahl
- 106: normierte Wurfweite
- 108: Streuscheibeninformationen
- 110: Scheibendrehzahl
- 112: Wurfweite
- 114: Referenzwurfrichtung
- 116: normierte Wurfrichtung
- 118: Wurfrichtung
- 120: Wert für die umzusetzende Arbeitsbreite
- 122: optimale Wurfweite
- 124: optimale Drehzahl
- 126: optimale Wurfrichtung
- 128: Wurfrichtungsregelung
- 130: Einstellwert Aufgabepunkt

## Patentansprüche

1. Verfahren zum Ermitteln von Einstellempfehlungen für eine landwirtschaftliche Streumaschine (10) für einen geplanten Streuvorgang, wobei die landwirtschaftliche Streumaschine (10) zumindest eine Streuscheibe aufweist, mit den Schritten:
- Bereitstellen von Informationen (108) zu der Streuscheibe der landwirtschaftlichen Streumaschine (10), welche bei dem geplanten Streuvorgang verwendet wird;
- Bereitstellen eines Wertes für die bei dem geplanten Streuvorgang umzusetzende Arbeitsbreite (120);
- Berechnen von Einstellempfehlungen für die landwirtschaftliche Streumaschine (10), welche die Einstellung einer optimalen Wurfrichtung (126) und einer optimalen Wurfweite (122) des Streuguts für den geplanten Streuvorgang bedingen und/oder ermöglichen,
wobei das Berechnen der Einstellempfehlungen für die landwirtschaftliche Streumaschine (10) unter Verwendung der bereitgestellten Informationen (108) zu der Streuscheibe der landwirtschaftlichen Streumaschine (10) und des bereitgestellten Wertes für die bei dem geplanten Streuvorgang umzusetzende Arbeitsbreite (120) erfolgt;
**dadurch gekennzeichnet, dass** das Berechnen der Einstellempfehlungen für die landwirtschaftliche Streumaschine (10) unter Verwendung einer normierten Wurfweite (106) und/oder einer normierten Wurfrichtung (116) erfolgt, welche sich auf eine Normausbringung des Streuguts mit einer Normstreuscheibe bei einer Normdrehzahl beziehen.

2. Verfahren nach Anspruch 1,
**gekennzeichnet durch** zumindest einen der folgenden Schritte:
- Ermitteln der normierten Wurfweite (106) des Streuguts;
- Abrufen der normierten Wurfweite (106) des Streuguts von einer Datenbank (18);
- Ermitteln der normierten Wurfrichtung (116) des Streuguts;
- Abrufen der normierten Wurfrichtung (116) des Streuguts von einer Datenbank (18).

3. Verfahren nach Anspruch 2,
**dadurch gekennzeichnet, dass** Ermitteln der normierten Wurfweite (106) des Streuguts zumindest einen der folgenden Schritte umfasst:
- Durchführen einer Referenzausbringung mittels der landwirtschaftlichen Streumaschine (10);
- Erfassen der bei der Referenzausbringung verwendeten Referenzstreuscheibe (100);
- Erfassen der bei der Referenzausbringung eingestellten Referenzdrehzahl (104) der Referenzstreuscheibe (100);
- Erfassen der Referenzwurfweite (102) des Streuguts bei der Referenzausbringung;
- Abruf eines scheibenspezifischen Wurfweitenumrechnungsfaktors zu der Referenzstreuscheibe (100) von einer Datenbank (18);
- Abruf eines drehzahlspezifischen Wurfweitenumrechnungsfaktors zu der Referenzdrehzahl (104) von einer Datenbank (18);
- Umrechnen der Referenzwurfweite (102) in die normierte Wurfweite (106) mittels des scheibenspezifischen Wurfweitenumrechnungsfaktors und/oder des drehzahlspezifischen Wurfweitenumrechnungsfaktors.

4. Verfahren nach Anspruch 2 oder 3,
**dadurch gekennzeichnet, dass** Ermitteln der normierten Wurfrichtung (116) des Streuguts zumindest einen der folgenden Schritte umfasst:
- Durchführen einer Referenzausbringung mittels der landwirtschaftlichen Streumaschine (10);
- Erfassen der bei der Referenzausbringung verwendeten Referenzstreuscheibe (100);
- Erfassen der bei der Referenzausbringung eingestellten Referenzdrehzahl (104) der Referenzstreuscheibe (100);
- Erfassen der Referenzwurfrichtung (114) des Streuguts bei der Referenzausbringung;
- Abruf eines scheibenspezifischen Wurfrichtungsumrechnungsoffsets zu der Referenzstreuscheibe (100) von einer Datenbank (18);
- Abruf eines drehzahlspezifischen Wurfrichtungsumrechnungsoffsets zu der Referenzdrehzahl (104) von einer Datenbank (18);
- Umrechnen der Referenzwurfrichtung (114) in die normierte Wurfrichtung (116) mittels des scheibenspezifischen Wurfrichtungsumrechnungsoffsets und/oder des drehzahlspezifischen Wurfrichtungsumrechnungsoffsets.

5. Verfahren nach einem der vorstehenden Ansprüche,
**dadurch gekennzeichnet, dass** das Berechnen der Einstellempfehlungen für die landwirtschaftliche Streumaschine (10) zumindest einen der folgenden Schritte umfasst:
- Ermitteln einer Einstellempfehlung für die optimale Drehzahl (124) der Streuscheibe der landwirtschaftlichen Streumaschine (10) für den geplanten Streuvorgang, welche die Einstellung der optimalen Wurfweite (122) des Streuguts bedingt und/oder ermöglicht; und
- Ermitteln einer Einstellempfehlung für den optimalen Aufgabepunkt (130) des Streuguts auf die Streuscheibe der landwirtschaftlichen Streumaschine (10) für den geplanten Streuvorgang, welche die Einstellung der optimalen Wurfrichtung (126) des Streuguts bedingt und/oder ermöglicht.

6. Verfahren nach Anspruch 5,
**dadurch gekennzeichnet, dass** das Ermitteln einer Einstellempfehlung für die optimale Drehzahl (124) der Streuscheibe der landwirtschaftlichen Streumaschine (10) für den geplanten Streuvorgang den folgenden Schritt umfasst:
- Berechnen einer optimalen Wurfweite (122) des Streuguts für den geplanten Streuvorgang auf Grundlage der bei dem geplanten Streuvorgang umzusetzenden Arbeitsbreite (120);
wobei das Ermitteln der Einstellempfehlung für die optimale Drehzahl (124) der Streuscheibe der landwirtschaftlichen Streumaschine (10) für den geplanten Streuvorgang auf Grundlage der normierten Wurfweite (106), der berechneten optimalen Wurfweite (122) und den Informationen (108) zu der Streuscheibe der landwirtschaftlichen Streumaschine (10), welche bei dem geplanten Streuvorgang verwendet wird, erfolgt.

7. Verfahren nach Anspruch 5 oder 6,
**dadurch gekennzeichnet, dass** das Ermitteln einer Einstellempfehlung für den optimalen Aufgabepunkt (130) des Streuguts auf die Streuscheibe der landwirtschaftlichen Streumaschine (10) für den geplanten Streuvorgang den folgenden Schritt umfasst:
- Berechnen einer optimalen Wurfrichtung (126) des Streuguts für den geplanten Streuvorgang auf Grundlage der bei dem geplanten Streuvorgang umzusetzenden Arbeitsbreite (120);
wobei das Ermitteln der Einstellempfehlung für den optimalen Aufgabepunkt (130) des Streuguts auf die Streuscheibe der landwirtschaftlichen Streumaschine (10) für den geplanten Streuvorgang auf Grundlage der normierten Wurfweite (106), der berechneten optimalen Wurfweite (122) und den Informationen (108) zu der Streuscheibe der landwirtschaftlichen Streumaschine (10), welche bei dem geplanten Streuvorgang verwendet wird, erfolgt.

## Claims

1. Method for determining setting recommendations for an agricultural spreader (10) for a planned spreading operation, wherein the agricultural spreader (10) has at least one spreading disc, with the steps of:
- providing information (108) to the spreading disc of the agricultural spreader (10), which is used in the planned spreading operation;
- providing a value for the working width (120) to be implemented in the planned spreading operation;
- calculating setting recommendations for the agricultural spreader (10), which necessitate and/or permit the setting of an optimum throwing direction (126) and an optimum throwing range (122) of the spreading material for the planned spreading operation,
wherein the setting recommendations for the agricultural spreader (10) are calculated using the information (108) provided to the spreading disc of the agricultural spreader (10) and the value provided for the working width (120) to be implemented in the planned spreading operation;
**characterized in that** the setting recommendations for the agricultural spreader (10) are calculated using a standardized throwing range (106) and/or a standardized throwing direction (116) that are based on a standard output of the spreading material with a standard spreading disc at a standard rotational speed.

2. Method according to Claim 1,
**characterized by** at least one of the following steps:
- determining the standardized throwing range (106) of the spreading material;
- retrieving the standardized throwing range (106) of the spreading material from a database (18);
- determining the standardized throwing direction (116) of the spreading material;
- retrieving the standardized throwing direction (116) of the spreading material from a database (18) .

3. Method according to Claim 2,
**characterized in that** determining the standardized throwing range (106) of the spreading material comprises at least one of the following steps:
- carrying out a reference output by means of the agricultural spreader (10);
- detecting the reference spreading disc (100) used in the reference output;
- detecting the reference rotational speed (104), which is set in the reference output, of the reference spreading disc (100);
- detecting the reference throwing range (102) of the spreading material in the reference output;
- retrieving a disc-specific throwing range conversion factor for the reference spreading disc (100) from a database (18);
- retrieving a rotational-speed-specific throwing range conversion factor for the reference rotational speed (104) from a database (18);
- converting the reference throwing range (102) into the standardized throwing range (106) by means of the disc-specific throwing range conversion factor and/or the rotational-speed-specific throwing range conversion factor.

4. Method according to Claim 2 or 3, **characterized in that** determining the standardized throwing range (106) of the spreading material comprises at least one of the following steps:
- carrying out a reference output by means of the agricultural spreader (10);
- detecting the reference spreading disc (100) used in the reference output;
- detecting the reference rotational speed (104), which is set in the reference output, of the reference spreading disc (100);
- detecting the reference throwing direction (114) of the spreading material in the reference output;
- retrieving a disc-specific throwing range conversion offset for the reference spreading disc (100) from a database (18);
- retrieving a rotational-speed-specific throwing range conversion offset for the reference rotational speed (104) from a database (18);
- converting the reference throwing direction (114) into the standardized throwing direction (116) by means of the disc-specific throwing range conversion offset and/or the rotational-speed-specific throwing range conversion offset.

5. Method according to one of the preceding claims,
**characterized in that** the calculation of the setting recommendations for the agricultural spreader (10) comprises at least one of the following steps:
- determining a setting recommendation for the optimum rotational speed (124) of the spreading disc of the agricultural spreader (10) for the planned spreading operation, the setting recommendation necessitating and/or permitting the setting of the optimum throwing range (122) of the spreading material; and
- determining a setting recommendation for the optimum feed point (130) of the spreading material to the spreader disc of the agricultural spreader (10) for the planned spreading operation, the setting recommendation necessitating and/or permitting the setting of the optimum throwing direction (126) of the spreading material.

6. Method according to Claim 5,
**characterized in that** the determining of a setting recommendation for the optimum rotational speed (124) of the spreading disc of the agricultural spreader (10) for the planned spreading operation comprises the following step:
- calculating an optimum throwing range (122) of the spreading material for the planned spreading operation on the basis of the working width (120) to be implemented in the planned spreading operation;
wherein the setting recommendation for the optimum rotational speed (124) of the spreading disc of the agricultural spreader (10) for the planned spreading operation is determined on the basis of the standardized throwing range (106), the calculated optimum throwing range (122) and the information (108) for the spreading disc of the agricultural spreader (10), which is used in the planned spreading operation.

7. Method according to Claim 5 or 6,
**characterized in that** the determination of a setting recommendation for the optimum feed point (130) of the spreading material to the spreading disc of the agricultural spreader (10) for the planned spreading operation comprises the following step:
- calculating an optimum throwing direction (126) of the spreading material for the planned spreading operation on the basis of the working width (120) to be implemented in the planned spreading operation;
wherein the setting recommendation for the optimum feed point (130) of the spreading material to the spreading disc of the agricultural spreader (10) for the planned spreading operation is determined on the basis of the standardized throwing range (106), the calculated optimum throwing range (122) and the information (108) for the spreading disc of the agricultural spreader (10), which is used in the planned spreading operation.

## Revendications

1. Procédé permettant de déterminer des recommandations de réglage pour un épandeur agricole (10) pour une opération d'épandage prévue, l'épandeur agricole (10) présentant au moins un disque d'épandage, comprenant les étapes consistant à :
fournir des informations (108) sur le disque d'épandage de l'épandeur agricole (10) qui est utilisé lors de l'opération d'épandage prévue ;
fournir une valeur pour la largeur de travail (120) à réaliser lors de l'opération d'épandage prévue ;
calculer des recommandations de réglage pour l'épandeur agricole (10) qui conditionnent et/ou permettent le réglage d'une direction de projection optimale (126) et d'une distance de projection optimale (122) de la matière à épandre pour l'opération d'épandage prévue,
le calcul des recommandations de réglage pour l'épandeur agricole (10) étant effectué en utilisant les informations fournies (108) concernant le disque d'épandage de l'épandeur agricole (10) et la valeur fournie pour la largeur de travail (120) à réaliser lors de l'opération d'épandage prévue ;
**caractérisé en ce que** le calcul des recommandations de réglage pour l'épandeur agricole (10) est effectué en utilisant une distance de projection normalisée (106) et/ou une direction de projection normalisée (116) qui font référence à une dissémination standard de la matière à épandre avec un disque d'épandage standard à une vitesse de rotation standard.

2. Procédé selon la revendication 1, **caractérisé par** au moins l'une des étapes suivantes :
- déterminer la distance de projection normalisée (106) de la matière à épandre ;
- extraire d'une base de données (18) la distance de projection normalisée (106) de la matière à épandre ;
- déterminer la direction de projection normalisée (116) de la matière à épandre ;
- extraire d'une base de données (18) la direction de projection normalisée (116) de la matière à épandre.

3. Procédé selon la revendication 2, **caractérisé en ce que** la détermination de la distance de projection normalisée (106) de la matière à épandre comprend au moins l'une des étapes suivantes consistant à :
- effectuer une dissémination de référence au moyen de l'épandeur agricole (10) ;
- détecter le disque d'épandage de référence (100) utilisé pour la dissémination de référence ;
- détecter la vitesse de rotation de référence (104) du disque d'épandage de référence (100), réglée lors de la dissémination de référence ;
- détecter la distance de projection de référence (102) de la matière à épandre lors de la dissémination de référence ;
- extraire d'une base de données (18) un facteur de conversion de distance de projection spécifique au disque concernant le disque d'épandage de référence (100) ;
- extraire d'une base de données (18) un facteur de conversion de distance de projection spécifique à la vitesse de rotation pour la vitesse de rotation de référence (104) ;
- convertir la distance de projection de référence (102) en distance de projection normalisée (106) au moyen du facteur de conversion de distance de projection spécifique au disque et/ou du facteur de conversion de distance de projection spécifique à la vitesse de rotation.

4. Procédé selon la revendication 2 ou 3, **caractérisé en ce que** la détermination de la direction de projection normalisée (116) de la matière à épandre comprend au moins l'une des étapes suivantes consistant à :
- effectuer une dissémination de référence au moyen de l'épandeur agricole (10) ;
- détecter le disque d'épandage de référence (100) utilisé lors de la dissémination de référence ;
- détecter la vitesse de rotation de référence (104) du disque d'épandage de référence (100), réglée lors de la dissémination de référence ;
- détecter la direction de projection de référence (114) de la matière à épandre lors de la dissémination de référence ;
- extraire d'une base de données (18) un décalage de conversion de direction de projection spécifique au disque concernant le disque d'épandage de référence (100) ;
- extraire d'une base de données (18) un décalage de conversion de direction de projection spécifique à la vitesse de rotation concernant la vitesse de rotation de référence (104) ;
- convertir la direction de projection de référence (114) en direction de projection normalisée (116) au moyen du décalage de conversion de direction de projection spécifique au disque et/ou du décalage de conversion de direction de projection spécifique à la vitesse de rotation.

5. Procédé selon l'une quelconque des revendications précédentes, **caractérisé en ce que** le calcul des recommandations de réglage pour l'épandeur agricole (10) comprend au moins l'une des étapes suivantes consistant à :
- déterminer une recommandation de réglage pour la vitesse de rotation optimale (124) du disque d'épandage de l'épandeur agricole (10) pour l'opération d'épandage prévue qui conditionne et/ou permet le réglage de la distance de projection optimale (122) de la matière à épandre ; et
- déterminer une recommandation de réglage pour le point de chute optimal (130) de la matière à épandre sur le disque d'épandage de l'épandeur agricole (10) pour l'opération d'épandage prévue qui conditionne et/ou permet le réglage de la direction de projection optimale (126) de la matière à épandre.

6. Procédé selon la revendication 5, **caractérisé en ce que** la détermination d'une recommandation de réglage pour la vitesse de rotation optimale (124) du disque d'épandage de l'épandeur agricole (10) pour l'opération d'épandage prévue comprend l'étape suivante consistant à :
- calculer une distance de projection optimale (122) de la matière à épandre pour l'opération d'épandage prévue sur la base de la largeur de travail (120) à réaliser lors de l'opération d'épandage prévue ;
la détermination de la recommandation de réglage pour la vitesse de rotation optimale (124) du disque d'épandage de l'épandeur agricole (10) pour l'opération d'épandage prévue étant effectuée sur la base de la distance de projection normalisée (106), de la distance de projection optimale calculée (122) et des informations (108) concernant le disque d'épandage de l'épandeur agricole (10) qui est utilisé lors de l'opération d'épandage prévue.

7. Procédé selon la revendication 5 ou 6, **caractérisé en ce que** la détermination d'une recommandation de réglage pour le point de chute optimal (130) de la matière à épandre sur le disque d'épandage de l'épandeur agricole (10) pour l'opération d'épandage prévue comprend l'étape suivante consistant à :
- calculer une direction de projection optimale (126) de la matière à épandre pour l'opération d'épandage prévue sur la base de la largeur de travail (120) à réaliser lors de l'opération d'épandage prévue ;
la détermination de la recommandation de réglage pour le point de chute optimal (130) de la matière à épandre sur le disque d'épandage de l'épandeur agricole (10) pour l'opération d'épandage prévue étant effectuée sur la base de la distance de projection normalisée (106), de la distance de projection optimale calculée (122) et des informations (108) concernant le disque d'épandage de l'épandeur agricole (10) qui est utilisé lors de l'opération d'épandage prévue.
